# FASCICULE DE BREVET EUROPEEN

(11) **EP 4 170 559 B1**
(45) Date de publication et mention de la délivrance du brevet: **03.07.2024**
(21) Numéro de dépôt: 22202821.9
(22) Date de dépôt: 20.10.2022
(51) Int. Cl.: G06N 10/40

(54) **DISPOSITIF DE QUBIT SUPRACONDUCTEUR A ISOLATION ELECTROMAGNETIQUE**
SUPRALEITENDE QUBIT-VORRICHTUNG MIT ELEKTROMAGNETISCHER ISOLIERUNG
SUPERCONDUCTING QUBIT DEVICE WITH ELECTROMAGNETIC ISOLATION

(30) Priorité: 22.10.2021 FR 2111275
(43) Date de publication de la demande: 26.04.2023
(73) Titulaire: Alice & Bob, 75015 Paris (FR)
(72) Inventeur: JEZOUIN, Sébastien, 75015 Paris (FR)
(74) Mandataire: Cabinet Netter

(56) Documents cités:
- WO-A2-2015/178990
- US-B1- 8 111 083
- MÁRIO G SILVEIRINHA ET AL: "Electromagnetic Characterization of Textured Surfaces Formed by Metallic Pins", IEEE TRANSACTIONS ON ANTENNAS AND PROPAGATION, IEEE, USA, vol. 56, no. 2, 2 février 2008 (2008-02-02), pages 405-415, XP011201039, ISSN: 0018-926X, DOI: 10.1109/TAP.2007.915442
- FERDINAND HELMER ET AL: "Two-dimensional cavity grid for scalable quantum computation with superconducting circuits", ARXIV.ORG, CORNELL UNIVERSITY LIBRARY, 201 OLIN LIBRARY CORNELL UNIVERSITY ITHACA, NY 14853, 25 juin 2007 (2007-06-25), XP080290824, DOI: 10.1209/0295-5075/85/50007

## Description

L'invention concerne le domaine de l'informatique quantique, et en particulier l'isolation électromagnétique des qubits.

Les qubits doivent répondre à deux exigences antagonistes : la fragilité de leur état quantique requiert qu'ils soient aussi isolés que possible du monde extérieur, mais la réalisation de mesures et de portes quantiques - au coeur de la réalisation d'un ordinateur quantique - nécessite de les coupler à des dispositifs externes tels que des générateurs d'impulsions micro-ondes.

Actuellement, les mises en oeuvre réelles parmi les plus avancées de qubits sont basées sur l'utilisation de circuits supraconducteurs, et cette technologie est qualifiée de « qubit supraconducteur ».

Les qubits supraconducteurs sont couplés au monde extérieur principalement par le biais du champ électromagnétique. Pour réaliser des mesures et des portes quantiques, les qubits supraconducteurs sont généralement couplés, éventuellement par le biais d'un système auxiliaire tel qu'un résonateur électromagnétique, à un mode propageant d'une ligne de transmission ou d'un guide d'ondes qui est connecté à des instruments à microondes permettant de contrôler et de mesurer les qubits.

Le couplage au mode propageant affecte l'état quantique des qubits, mais cet effet peut être limité, par exemple en filtrant le mode propageant. Cependant, tout autre mode électromagnétique incontrôlé présent dans l'environnement des qubits contribue à détruire leurs états quantiques.

L'un des principaux défis de la conception d'un ordinateur quantique basé sur des qubits supraconducteurs est donc de concevoir l'environnement électromagnétique des qubits de manière à ce qu'ils puissent être couplés à des lignes de transmission ou à des guides d'ondes tout en minimisant l'impact des autres modes qui sont inévitablement présents.

La solution la plus classique consiste à insérer le qubit supraconducteur dans une boîte dont le mode de résonance fondamental est à une fréquence supérieure à celle du qubit. Il n'y a alors aucun mode électromagnétique à la fréquence du qubit ou en dessous. Cela permet de protéger l'état quantique du qubit des pertes radiatives. Cette approche est par exemple décrite dans l'article de Paik et al., « Observation of high cohérence in Josephson junction qubits measured in a three-dimensional circuit QED architecture », Physical Review Letters 107, 240501 (2011) et dans l'article de Huang et al. « Microwave Package Design for Superconducting Quantum Processors », PRX Quantum 2, 020306 (2021).

Dans le cas des codes bosoniques, l'un des modes de la boîte est utilisé comme le qubit lui-même. Pour des raisons pratiques de fabricabilité et d'insertion de circuits, la boîte est traditionnellement constituée de deux parties qui sont soudées ensemble. L'interface boîte-soudure entraîne cependant des pertes résistives qui limitent fortement la durée de vie de l'état quantique du qubit, même si la boîte et la soudure sont faites de matériaux supraconducteurs.

Une solution à ce problème consiste à former une cavité à l'intérieur de la masse d'un matériau supraconducteur en perçant ou en fraisant, par exemple, des tunnels à partir de l'extérieur de la masse supraconductrice. Si la section transversale du tunnel est suffisamment petite, le champ électromagnétique ne s'y propagera pas en dessous d'une certaine fréquence de coupure. En choisissant une fréquence de coupure supérieure à la fréquence du mode fondamental de la cavité, ce dernier peut donc être utilisé comme un qubit à longue durée de vie. Ce type d'approche est décrit dans l'article de Reagor et al. « Quantum memory with millisecond cohérence in circuit QED », Physical Review B 94, 014506 (2016) et dans l'article de Chakram et al. « Seamless High-Q Microwave Cavities for Multimode Circuit Quantum Electrodynamics », Physical Review Letters 127, 107701 (2021).

Le principal inconvénient de ces solutions réside dans les exigences strictes en matière de dimensionnement de la boîte. En effet, la taille de la boîte et de la section transversale du tunnel doit être typiquement inférieure à c/f, où f est la fréquence du qubit et c la vitesse de la lumière.

De ce fait, la taille de la boîte est relativement petite, ce qui constitue un problème majeur lors de la mise à l'échelle vers de nombreux qubits, puisque tous les qubits doivent se trouver dans une même boîte. De plus, la limitation de la section transversale des tunnels pose des problèmes de fabrication, car les tunnels doivent être à la fois étroits et longs. En outre, tous les circuits nécessaires pour contrôler le qubit doivent passer par les tunnels, ce qui entraîne d'autres difficultés.

L'ensemble de ces contraintes rend cette solution particulièrement mal adaptée à la mise à l'échelle et à l'industrialisation. La demande WO 2015/178990 A2 (RIGETTI & CO INC [US]), 26 novembre 2015, concerne un dispositif de qubit supraconducteur à isolation électromagnétique comprenant un conducteur électrique présentant une face sensiblement plane et un ou plusieurs qubits réalisés sur ou dans l'un dudit conducteur électrique.

L'invention vient améliorer la situation. À cet effet, elle propose un dispositif de qubit supraconducteur à isolation électromagnétique comme définit dans la revendication 1.

Ce dispositif est particulièrement avantageux car il permet, de réaliser un dispositif d'isolation électromagnétique de qubit supraconducteur qui peut être mis à l'échelle. De plus, sa fabrication et son industrialisation posent beaucoup moins de problèmes.

Selon divers modes de réalisation, l'invention peut présenter une ou plusieurs des caractéristiques suivantes :
- les saillies sont agencées de manière sensiblement périodique dans le plan de la base conductrice électriquement avec une périodicité inférieure à la vitesse de la lumière effective entre la face dudit conducteur magnétique artificiel et la face dudit conducteur électrique divisée par 8 fois la fréquence la plus petite parmi lesdits un ou plusieurs qubits,
- les saillies présentent une hauteur sensiblement supérieure à la vitesse de la lumière effective entre la face dudit conducteur magnétique artificiel et la face dudit conducteur électrique divisée par 4 fois la fréquence la plus petite parmi lesdits un ou plusieurs qubits,
- la périodicité des saillies varie de moins de 50%,
- lesdits un ou plusieurs qubits sont réalisés par un circuit supraconducteur bidimensionnel,
- le circuit supraconducteur comprend une base en silicium ou en oxyde d'aluminium dont la surface est gravée,
- lesdits un ou plusieurs qubits sont réalisés avec des résonateurs harmoniques tridimensionnels à encodage bosonique,
- les résonateurs harmoniques tridimensionnels sont réalisés dans ledit conducteur électrique,
- les résonateurs harmoniques tridimensionnels sont réalisés dans le conducteur magnétique artificiel,
- le dispositif comprend en outre un circuit supraconducteur bidimensionnel agencé pour commander ou mesurer lesdits un ou plusieurs qubits,
- le circuit supraconducteur est disposé sensiblement contre la face dudit conducteur électrique, sensiblement contre la face dudit conducteur magnétique artificiel ou entre celles-ci, en occupant une partie ou la totalité de l'espace entre celles-ci, et
- le conducteur électrique est réalisé en aluminium à degré de pureté supérieur ou égal à 99,99%, en niobium, en matériau supraconducteur ou un cuivre recouvert d'un film supraconducteur comme l'aluminium, le niobium, le tantale le nitrure de titane ou le nitrure de niobium.

L'invention concerne également une unité de calcul quantique caractérisée en ce qu'elle comprend plusieurs dispositifs selon l'une des revendications précédentes agencés les uns après les autres selon une direction de longueur de la face du conducteur électrique desdits plusieurs dispositifs.

D'autres caractéristiques et avantages de l'invention apparaîtront mieux à la lecture de la description qui suit, tirée d'exemples donnés à titre illustratif et non limitatif, tirés des dessins sur lesquels :
- [Fig.1] représente un schéma générique en vue de côté d'un premier mode de réalisation d'un dispositif d'isolation électromagnétique de qubit supraconducteur selon l'invention,
- [Fig.2] représente un schéma générique en vue de dessus d'un premier mode de réalisation d'un dispositif d'isolation électromagnétique de qubit supraconducteur selon l'invention,
- [Fig.3] représente un schéma générique en vue de côté d'un deuxième mode de réalisation d'un dispositif d'isolation électromagnétique de qubit supraconducteur selon l'invention,
- [Fig.4] représente un exemple de réalisation d'un conducteur électrique selon le mode de réalisation de la [Fig.3],
- [Fig.5] représente un exemple de réalisation d'un conducteur magnétique artificiel selon le mode de réalisation de la [Fig.3],
- [Fig.6] représente un dispositif selon le mode de réalisation de la [Fig.3] réalisé à partir des éléments des figures 4 et 5, et
- [Fig.7] représente un exemple de réalisation en variante d'un conducteur magnétique artificiel selon le mode de réalisation de la [Fig.3].

Les dessins et la description ci-après contiennent, pour l'essentiel, des éléments de caractère certain. Ils pourront donc non seulement servir à mieux faire comprendre la présente invention.

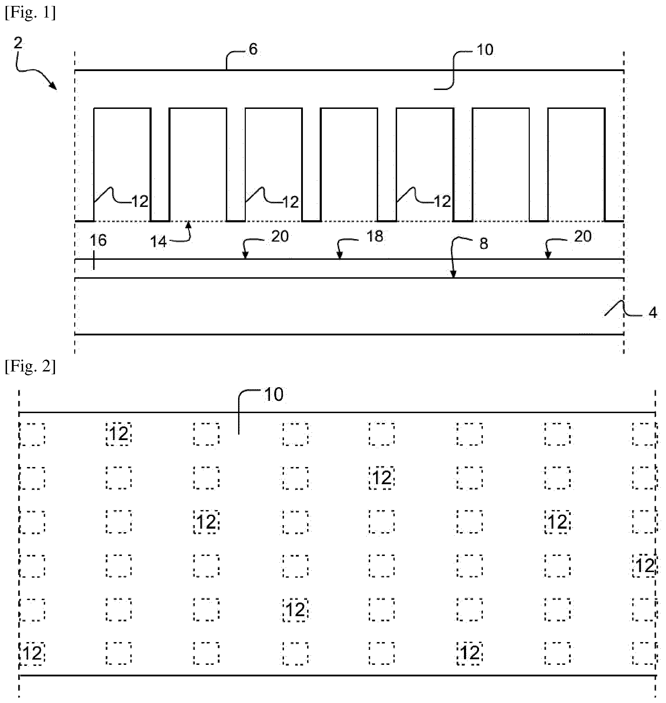

La [Fig.1] représente un schéma générique en vue de côté d'un premier mode de réalisation d'un dispositif d'isolation électromagnétique de qubit supraconducteur 2 selon l'invention.

Le dispositif 2 comprend un conducteur électrique 4 et un conducteur magnétique artificiel 6.

Dans l'exemple décrit ici, le conducteur électrique est une pièce usinée en aluminium haute pureté (supérieure ou égale à 99,99%). Son épaisseur est typiquement de quelques millimètres et, en tout état de fait, au moins égale à la longueur de pénétration de London dans le matériau. Le conducteur électrique peut optionnellement recevoir un traitement de surface après usinage pour augmenter la pureté et/ou la planéité et/ou l'état cristallographique. Ce traitement peut inclure un décapage acide pour retirer l'oxyde d'aluminium et autres contaminants de surface, un recuit pour supprimer les défauts cristallographiques ou un polissage électrochimique pour diminuer la rugosité de surface. Le conducteur électrique pourrait être usiné dans un autre matériau supraconducteur comme le niobium. Il pourrait aussi être usiné dans un matériau comme le cuivre, qui n'est pas supraconducteur mais a une conductivité thermique élevée, puis recouvert, par évaporation ou pulvérisation par exemple, d'un film supraconducteur comme l'aluminium, le niobium, le tantale le nitrure de titane ou le nitrure de niobium.

Le conducteur électrique 4 présente une face 8 sensiblement plane en regard du conducteur magnétique artificiel 6.

Les conducteurs magnétiques artificiels sont des métamatériaux souvent réalisés sous la forme d'une base périodique munie de motifs de métallisation qui sont conçus pour mettre en oeuvre une bande interdite électromagnétique, c'est-à-dire une bande de fréquences dans laquelle des ondes électromagnétiques ne peuvent pas se propager. L'article de M. G. Silveirinha, C. A. Fernandes and J. R. Costa, « Electromagnetic Characterization of Textured Surfaces Formed by Metallic Pins » in IEEE Transactions on Antennas and Propagation, vol. 56, no. 2, pp. 405-415, Feb. 2008, doi: 10.1109/TAP.2007.915442 décrit la caractérisation de tels matériaux, en particulier lorsqu'ils comprennent des surfaces texturées formées par une disposition périodique de fines broches métalliques fixées à un plan de masse conducteur.

Dans l'exemple décrit ici, le conducteur magnétique artificiel 6 est dans un matériau similaire à celui prévu pour le conducteur électrique 4.

Le conducteur magnétique artificiel 6 est dit bidimensionnel et présente ici une base 10 et une pluralité de saillies 12 en forme de clous, disposés de telle sorte qu'ils définissent une face 14 du conducteur magnétique artificiel 6 qui est sensiblement plane. La [Fig.2] qui est une vue de dessus permet d'observer la répartition des clous 12 dans le conducteur magnétique artificiel 6.

Le conducteur électrique 4 et le conducteur magnétique artificiel 6 sont agencés de telle manière que la face 8 et la face 14 se font sensiblement face, et sont sensiblement parallèles entre elles.

Le dispositif 2 comprend en outre un circuit supraconducteur 16, typiquement en silicium (Si) ou en oxyde d'aluminium (Al2O3), qui repose sur la face 8 du conducteur électrique 4. Une surface 18 du circuit supraconducteur 16 en regard de la face 14 du conducteur magnétique artificiel 6 présente des motifs réalisés par lithographie qui définissent des qubits supraconducteurs 20 et leurs circuits de commande.

Les travaux de la Demanderesse lui ont permis de découvrir que le dimensionnement du conducteur magnétique artificiel 6 d'une part, et de son agencement relatif avec le conducteur électrique 4 d'autre part permettent de réaliser une bande interdite électromagnétique particulièrement intéressante pour l'application aux qubits supraconducteurs. En effet, si cette bande interdite électromagnétique englobe les fréquences associées aux états des qubits, alors ceux-ci sont naturellement protégés contre une perte par radiation, ce qui est renforcé par l'utilisation de matériaux supraconducteurs pour le conducteur électrique 4 et le conducteur magnétique artificiel 6.

Ainsi la Demanderesse a découvert qu'une bande interdite électromagnétique comprenant les fréquences des qubits formés sur le circuit supraconducteur 16 peut être réalisée si les conditions suivantes sont respectées :
- les clous 12 sont agencés de manière régulière et périodique comme représenté sur la [Fig.2], cette périodicité étant inférieure à la vitesse de la lumière effective (c'est-à-dire la vitesse moyenne de la lumière entre la face 14 et la face 8, qui peut être diminuée en fonction de l'épaisseur du circuit supraconducteur 16 et de l'indice optique de son matériau) divisée par 8 fois la fréquence la plus grande parmi les qubits formés sur le circuit supraconducteur 16, soit une distance de 5,4 mm pour une fréquence typique de 7 GHz et une permittivité relative égale à 1,
- la hauteur des clous 12 depuis la base 10, c'est-à-dire la hauteur sans compter l'épaisseur de la base 10, est sensiblement supérieure à la vitesse de la lumière effective divisée par 4 de fois la fréquence la plus petite parmi les qubits formés sur le circuit supraconducteur 16, soit une distance de 15,0 mm pour une fréquence typique de 5 GHz et une permittivité relative égale à 1, et
- la distance entre la surface magnétique effective du conducteur magnétique artificiel 6 (non représentée sur les dessins) et la face 8 est inférieure à la vitesse de la lumière effective divisée par 4 fois la fréquence la plus grande parmi les qubits formés sur le circuit supraconducteur 16. Cela revient à ce que la distance entre la face 8 et la base 10, prise au pied des clous 12, est sensiblement inférieure à la vitesse de la lumière divisée par 2 fois la fréquence la plus grande parmi les qubits formés dans le circuit supraconducteur 16, soit une distance de 21,4 mm pour une fréquence typique de 7 GHz et une permittivité relative égale à 1.

En outre la Demanderesse a observé que ces résultats peuvent également être obtenus si les lignes de clous sont décalées les unes par rapport aux autres, verticalement ou horizontalement, c'est-à-dire que les clous 12 peuvent être alignés en lignes horizontales mais être décalés verticalement, ou être alignés en lignes verticales mais décalés horizontalement. La Demanderesse a en outre observé qu'une tolérance jusqu'à 50% de la périodicité des clous 12 donnait encore des résultats satisfaisants.

Lorsque l'on observe la [Fig.2], on peut voir que les clous 12 forment ensemble comme un lit de clous ou un lit de fakir. Bien que la combinaison de cette conception spécifique du conducteur magnétique artificiel 6 avec le conducteur électrique 4 et les dimensions évoquées plus haut donne des résultats particulièrement satisfaisants, d'autres conceptions de conducteur magnétique artificiel 6 pourront être utilisées dès lors qu'elles permettent de réaliser la bande interdite électromagnétique relative aux fréquences des qubits que contient le dispositif 2.

De plus, comme on peut le voir par les tirets sur les figures 1 et 2, de par l'aspect essentiellement bidimensionnel du dispositif 2, celui-ci peut aisément être fabriqué avec des dimensions importantes et offrir une protection électromagnétique à de nombreux qubits. Il peut également être réalisé par des morceaux qui reproduisent la structure du dispositif 2 que l'on vient mettre bout à bout les uns des autres. Ces morceaux permettent de fournir une approche modulaire à l'isolation électromagnétique des qubits supraconducteurs, ce qui est très avantageux pour la production à échelle.

En variante, le circuit supraconducteur 16 pourrait reposer sur la face 14, soit en regard de la face 8 du conducteur électrique 4, soit en regard de la face 14. Dans ce dernier cas, la conception du circuit supraconducteur 16 doit être prévue de telle sorte que les motifs ne définissent pas de chemin susceptible de venir en contact avec les clous 12 afin d'éviter tout risque de court-circuit. Le circuit supraconducteur 16 pourra également être agencé entre la face 8 et la face 14.

Enfin, le circuit supraconducteur 16 pourra être agencé pour occuper sensiblement tout l'espace entre la face 14 et la face 8 du conducteur électrique 4. Cette dernière variante est particulièrement intéressante car, lorsque le circuit supraconducteur 16 occupe sensiblement tout l'espace, la vitesse effective de la lumière qui se propage entre la face 8 et la face 14 est diminuée, ce qui augmente la largeur fréquentielle de la bande interdite électromagnétique mise en oeuvre.

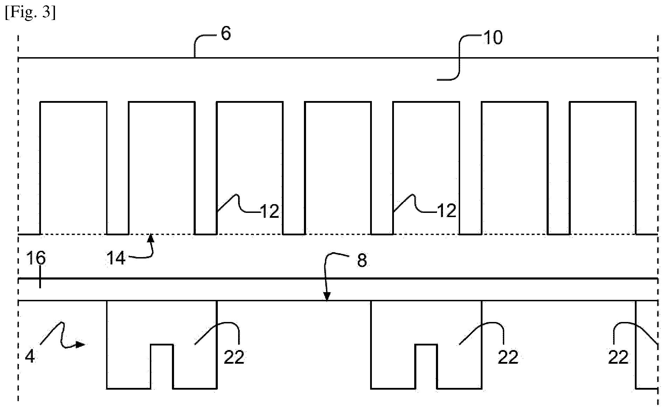

La [Fig.3] représente une vue de côté d'un deuxième mode de réalisation du dispositif 2 selon l'invention, dans lequel les qubits supraconducteurs ne sont plus stockés dans un circuit supraconducteur pour former des qubits dits bidimensionnels, mais sont stockés dans des résonnateurs harmoniques tridimensionnels 22.

Les résonnateurs harmoniques tridimensionnels 22 peuvent en particulier être réalisés dans le conducteur électrique 4, et mettre en oeuvre un encodage bosonique. Leur commande peut être réalisée par un circuit supraconducteur 16 similaire à celui de la [Fig.1] qui repose là encore sur la face 8, la face 14 ou entre celles-ci (en occupant sensiblement tout l'espace ou pas).

Dans ce mode de réalisation, le seul endroit dans lequel les photons des qubits peuvent se dissiper en émettant une radiation est l'espace compris entre la face 8 et les clous 12. Mais, comme cet espace réalise une bande interdite électromagnétique qui englobe les fréquences des états des qubits, là encore les résonateurs harmoniques tridimensionnels 22 sont protégés.

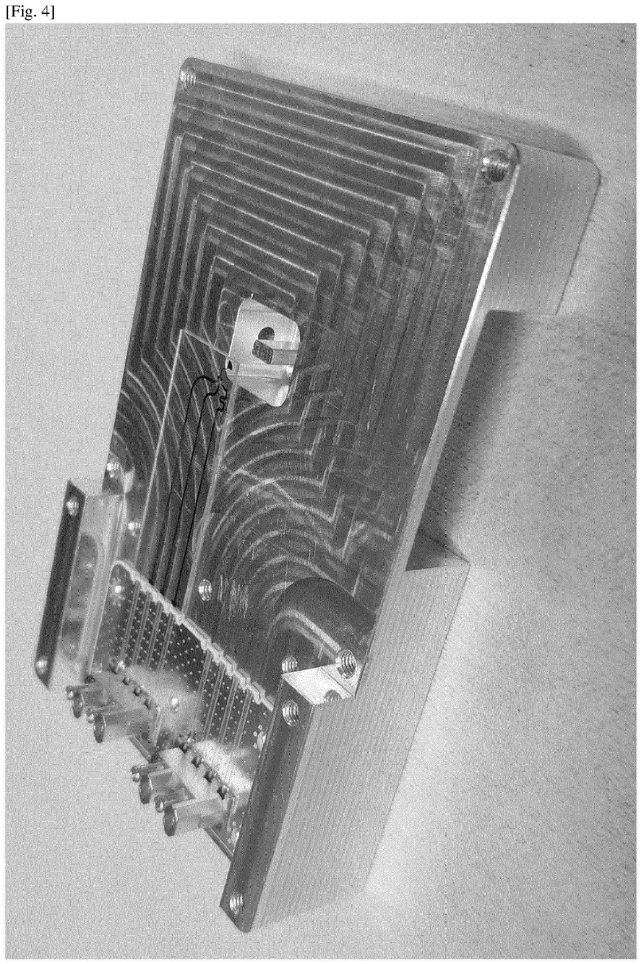

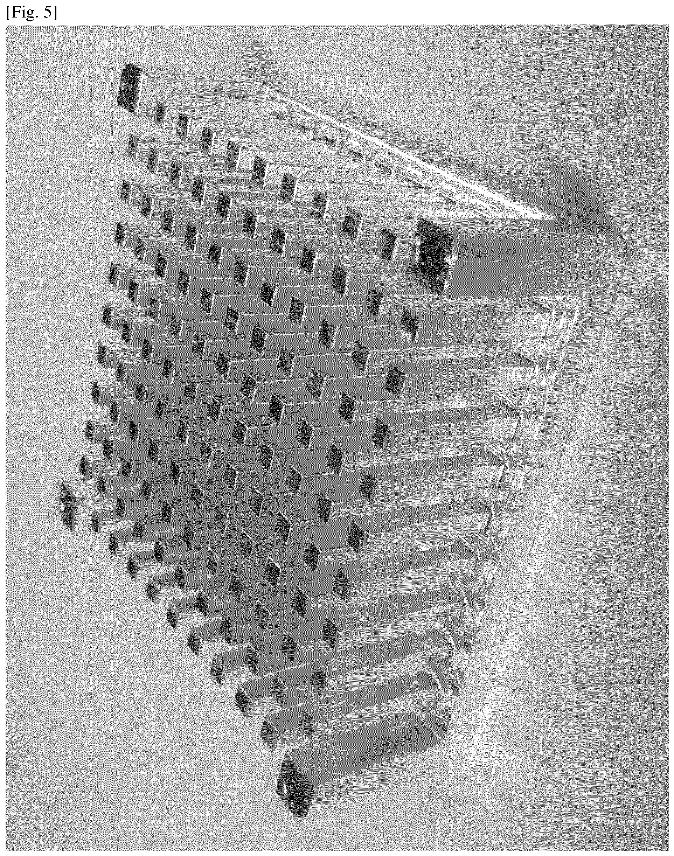

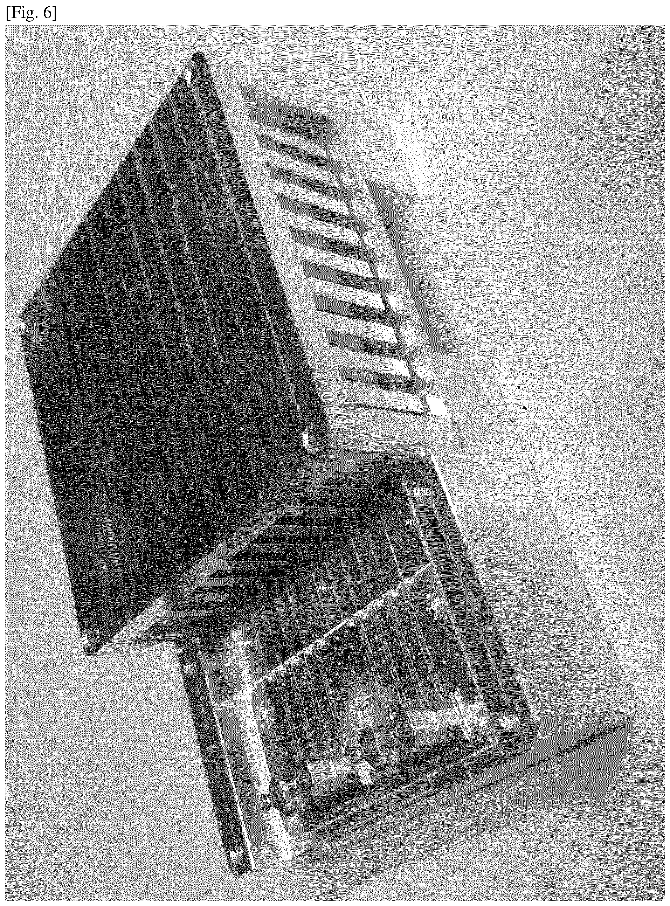

Les figures 4, 5 et 6 représentent des photographies d'un dispositif selon le mode de réalisation de la [Fig.3]. Ainsi, la [Fig.4] montre le conducteur électrique sur lequel est posé un substrat en Al2O3 qui reçoit des pistes électriques qui se prolongent jusqu'à la cavité du résonateur harmonique tridimensionnel, la [Fig.5] montre le conducteur magnétique artificiel et les clous qui le composent, et la [Fig.6] montre le montage des éléments des figures 4 et 5 ensemble pour former le dispositif complet.

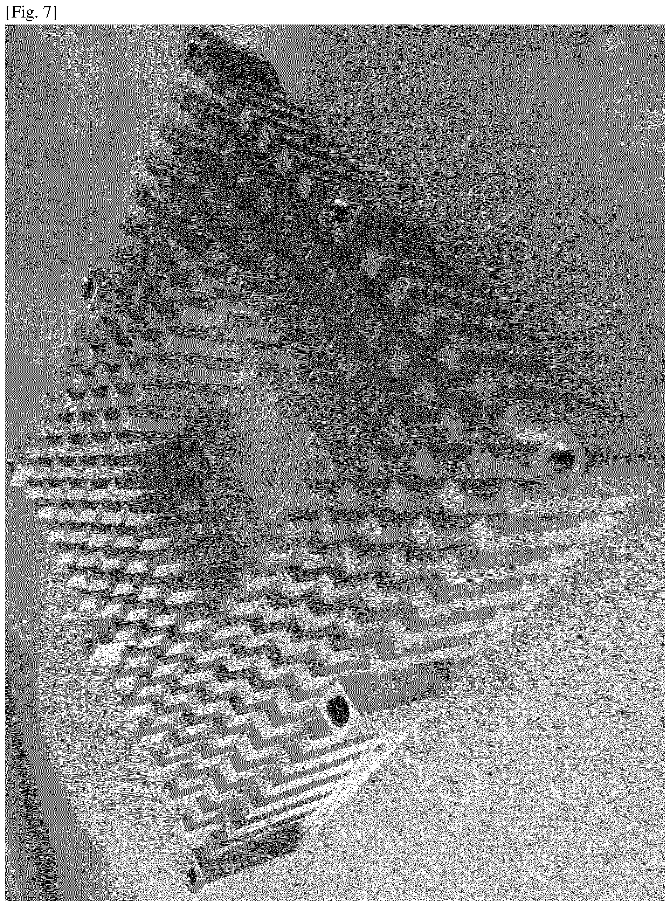

En outre, bien que les résonateurs harmoniques tridimensionnels 22 aient été représentés comme réalisés dans le conducteur électrique 4 sur la [Fig.3], ils pourraient également être réalisés entre les clous 12 dans le matériau magnétique artificiel 6. Un exemple d'une telle réalisation est représenté sur la [Fig.7].

Une autre réalisation possible du conducteur magnétique artificiel 6, qui a l'avantage d'être réalisable avec des procédés standards de nanofabrication, consiste à réaliser des structures résonantes à l'intérieur d'un substrat de silicium (Si) ou d'oxyde d'aluminium (Al2O3) remplissant un rôle similaire à celui des clous 12. Ces structures consistent en des patchs à la surface du substrat, reliés par des vias à l'autre face du substrat. Les patchs, les vias et la face arrière du substrat sont métallisés au moyen d'un film supraconducteur (en aluminium, niobium ou tantale par exemple). Des résultats similaires à ceux décrits en référence aux modes de réalisations décrits plus haut peuvent être obtenus en agençant ces structures en forme de champignon de manière régulière et périodique dans le substrat, cette périodicité étant inférieure à la vitesse de la lumière effective divisée par 8 fois la fréquence la plus grande parmi les qubits. Leur fréquence de résonance est sensiblement inférieure au quart de la fréquence la plus petite parmi les qubits.

## Revendications

1. Dispositif de qubit supraconducteur à isolation électromagnétique comprenant un conducteur électrique (4) présentant une face (8) sensiblement plane et un conducteur magnétique artificiel (6) présentant une face (14) sensiblement plane en regard de la face (8) dudit conducteur électrique (4), et un ou plusieurs qubits (20) réalisés sur ou dans l'un dudit conducteur électrique (4) et dudit conducteur magnétique artificiel (6), les dimensions des éléments constituant le conducteur magnétique artificiel (6) et la distance séparant la face (8) dudit conducteur électrique (4) et la face (14) dudit conducteur magnétique artificiel (6) étant choisies de manière à réaliser une structure à bande électromagnétique interdite qui comprend les fréquences desdits qubits (20), le conducteur magnétique artificiel (6) comprenant une base conductrice électriquement (10) sensiblement plane à partir de laquelle s'élève une pluralité de saillies (12) selon une direction sensiblement orthogonale à la base conductrice électriquement formant ensemble un lit de clous, et la distance séparant la face (8) dudit conducteur électrique (4) et la base (10) dudit conducteur magnétique artificiel (6) au pied des saillies (12) étant sensiblement inférieure à la vitesse de la lumière effective entre la face (14) dudit conducteur magnétique artificiel (6) et la face (8) dudit conducteur électrique (4) divisée par 2 fois la fréquence la plus grande parmi lesdits un ou plusieurs qubits.

2. Dispositif selon la revendication 1, dans lequel les saillies (12) sont agencées de manière sensiblement périodique dans le plan de la base conductrice électriquement avec une périodicité inférieure à la vitesse de la lumière effective entre la face (14) dudit conducteur magnétique artificiel (6) et la face (8) dudit conducteur électrique (4) divisée par 8 fois la fréquence la plus petite parmi lesdits un ou plusieurs qubits.

3. Dispositif selon la revendication 2, dans lequel les saillies (12) présentent une hauteur sensiblement supérieure à la vitesse de la lumière effective entre la face (14) dudit conducteur magnétique artificiel (6) et la face (8) dudit conducteur électrique (4) divisée par 4 fois la fréquence la plus petite parmi lesdits un ou plusieurs qubits.

4. Dispositif selon l'une des revendications précédentes, dans lequel la périodicité des saillies (12) varie de moins de 50%.

5. Dispositif selon l'une des revendications précédentes, dans lequel lesdits un ou plusieurs qubits sont réalisés par un circuit supraconducteur (16) bidimensionnel.

6. Dispositif selon la revendication 5, dans lequel le circuit supraconducteur (16) comprend une base en silicium ou en oxyde d'aluminium dont la surface est gravée.

7. Dispositif selon l'une des revendications 1 à 4, dans lequel lesdits un ou plusieurs qubits (20) sont réalisés avec des résonateurs harmoniques tridimensionnels (22) à encodage bosonique.

8. Dispositif selon la revendication 7, dans lequel les résonateurs harmoniques tridimensionnels (22) sont réalisés dans ledit conducteur électrique (4).

9. Dispositif selon la revendication 7, dans lequel les résonateurs harmoniques tridimensionnels (22) sont réalisés dans le conducteur magnétique artificiel (6).

10. Dispositif selon l'une des revendications 7 à 9, comprenant en outre un circuit supraconducteur (16) bidimensionnel agencé pour commander ou mesurer lesdits un ou plusieurs qubits (20).

11. Dispositif selon l'une des revendications 5, 6 et 10, dans lequel le circuit supraconducteur (16) est disposé sensiblement contre la face (8) dudit conducteur électrique (4), sensiblement contre la face (14) dudit conducteur magnétique artificiel (6) ou entre celles-ci, en occupant une partie ou la totalité de l'espace entre celles-ci.

12. Dispositif selon l'une des revendications précédentes, dans lequel le conducteur électrique (4) est réalisé en aluminium à degré de pureté supérieur ou égal à 99,99%, en niobium, en matériau supraconducteur ou un cuivre recouvert d'un film supraconducteur comme l'aluminium, le niobium, le tantale le nitrure de titane ou le nitrure de niobium.

13. Unité de calcul quantique **caractérisée en ce qu'**elle comprend plusieurs dispositifs selon l'une des revendications précédentes agencés les uns après les autres selon une direction de longueur de la face (8) du conducteur électrique (4) desdits plusieurs dispositifs.

## Patentansprüche

1. Elektromagnetisch isolierte supraleitende Qubit-Vorrichtung, umfassend einen elektrischen Leiter (4) mit einer im Wesentlichen ebenen Fläche (8) und einen künstlichen magnetischen Leiter (6) mit einer im Wesentlichen ebenen Fläche (14), die der Fläche (8) des elektrischen Leiters (4) gegenüberliegt, und ein oder mehrere Qubits (20), die auf oder in einem von dem elektrischen Leiter (4) und dem künstlichen magnetischen Leiter (6) ausgebildet sind, wobei die Abmessungen der Elemente, die den künstlichen magnetischen Leiter (6) bilden, und der Abstand zwischen der Fläche (8) des elektrischen Leiters (4) und der Fläche (14) des künstlichen magnetischen Leiters (6) so gewählt sind, dass eine elektromagnetische Bandlückenstruktur entsteht, die die Frequenzen der Qubits (20) einschließt, der künstliche magnetische Leiter (6), umfassend eine im Wesentlichen ebene, elektrisch leitende Basis (10), von der sich eine Vielzahl von Vorsprüngen (12) in einer Richtung im Wesentlichen orthogonal zur elektrisch leitenden Basis erhebt, die zusammen ein Nagelbett bilden, und der Abstand zwischen der Fläche (8) des elektrischen Leiters (4) und der Basis (10) des künstlichen magnetischen Leiters (6) am Fuß der Vorsprünge (12) wesentlich geringer ist als die effektive Lichtgeschwindigkeit zwischen der Fläche (14) des künstlichen magnetischen Leiters (6) und der Fläche (8) des elektrischen Leiters (4) geteilt durch das Zweifache der höchsten Frequenz des einen oder der mehreren Qubits.

2. Vorrichtung nach Anspruch 1, wobei die Vorsprünge (12) im Wesentlichen periodisch in der Ebene der elektrisch leitenden Basis mit einer Periodizität angeordnet sind, die geringer ist als die effektive Lichtgeschwindigkeit zwischen der Fläche (14) des künstlichen magnetischen Leiters (6) und der Fläche (8) des elektrischen Leiters (4) geteilt durch das Achtfache der niedrigsten Frequenz des einen oder der mehreren Qubits.

3. Vorrichtung nach Anspruch 2, wobei die Vorsprünge (12) eine Höhe haben, die wesentlich größer ist als die effektive Lichtgeschwindigkeit zwischen der Fläche (14) des künstlichen magnetischen Leiters (6) und der Fläche (8) des elektrischen Leiters (4) geteilt durch das Vierfache der niedrigsten Frequenz des einen oder der mehreren Qubits.

4. Vorrichtung nach einem der vorstehenden Ansprüche, wobei die Periodizität der Vorsprünge (12) um weniger als 50 % variiert.

5. Vorrichtung nach einem der vorstehenden Ansprüche, wobei das eine oder die mehreren Qubits durch eine zweidimensionale supraleitende Schaltung (16) realisiert sind.

6. Vorrichtung nach Anspruch 5, wobei die supraleitende Schaltung (16) eine Silizium- oder Aluminiumoxidbasis mit einer geätzten Oberfläche umfasst.

7. Vorrichtung nach einem der Ansprüche 1 bis 4, wobei das eine oder die mehreren Qubits (20) mit dreidimensionalen harmonischen Resonatoren (22) mit bosonischer Kodierung implementiert sind.

8. Vorrichtung nach Anspruch 7, wobei die dreidimensionalen harmonischen Resonatoren (22) in dem elektrischen Leiter (4) ausgebildet sind.

9. Vorrichtung nach Anspruch 7, wobei die dreidimensionalen harmonischen Resonatoren (22) in dem künstlichen magnetischen Leiter (6) erzeugt werden.

10. Vorrichtung nach einem der Ansprüche 7 bis 9, ferner umfassend eine zweidimensionale supraleitende Schaltung (16), die zur Steuerung oder Messung des einen oder der mehreren Qubits (20) angeordnet ist.

11. Vorrichtung nach einem der Ansprüche 5, 6 und 10, wobei die supraleitende Schaltung (16) im Wesentlichen gegen die Fläche (8) des elektrischen Leiters (4), im Wesentlichen gegen die Fläche (14) des künstlichen magnetischen Leiters (6) oder dazwischen angeordnet ist und einen Teil oder den gesamten Raum dazwischen belegt.

12. Vorrichtung nach einem der vorstehenden Ansprüche, wobei der elektrische Leiter (4) aus Aluminium mit einem Reinheitsgrad größer oder gleich 99,99 %, Niob, einem supraleitenden Material oder einem mit einer supraleitenden Schicht wie Aluminium, Niob, Tantal, Titannitrid oder Niobnitrid überzogenen Kupfer besteht.

13. Quantencomputereinheit, **dadurch gekennzeichnet, dass** sie eine Vielzahl von Vorrichtungen nach einem der vorstehenden Ansprüche umfasst, die nacheinander entlang einer Längsrichtung der Fläche (8) des elektrischen Leiters (4) der Vielzahl von Vorrichtungen angeordnet sind.

## Claims

1. An electromagnetically insulated superconducting qubit device comprising an electrical conductor (4) having a substantially planar face (8) and an artificial magnetic conductor (6) having a substantially planar face (14) facing the face (8) of said electrical conductor (4), and one or more qubits (20) made on or in one of said electrical conductor (4) and said artificial magnetic conductor (6), the dimensions of the elements forming the artificial magnetic conductor (6) and the distance separating the face (8) of said electrical conductor (4) and the face (14) of said artificial magnetic conductor (6) being chosen so as to make an electromagnetic band gap structure which comprises the frequencies of said qubits (20), the artificial magnetic conductor (6) comprising a substantially planar electrically conductive base (10) from which a plurality of projections (12) project in a direction substantially orthogonal to the electrically conductive base together forming a bed of nails, and the distance separating the face (8) of said electrical conductor (4) and the base (10) of said artificial magnetic conductor (6) at the base of the projections (12) being substantially less than the effective speed of light between the face (14) of said artificial magnetic conductor (6) and the face (8) of said electrical conductor (4) divided by twice the highest frequency among said one or more qubits.

2. The device according to claim 1, wherein the projections (12) are arranged substantially periodically in the plane of the electrically conductive base with a periodicity less than the effective speed of light between the face (14) of said artificial magnetic conductor (6) and the face (8) of said electrical conductor (4) divided by 8 times the smallest frequency among said one or more qubits.

3. The device according to claim 2, wherein the projections (12) have a height substantially greater than the effective speed of light between the face (14) of said artificial magnetic conductor (6) and the face (8) of said electrical conductor (4) divided by 4 times the smallest frequency among said one or more qubits.

4. The device according to one of the preceding claims, wherein the periodicity of the projections (12) varies by less than 50%.

5. The device according to one of the preceding claims, wherein said one or more qubits are made by a two-dimensional superconducting circuit (16).

6. The device according to claim 5, wherein the superconducting circuit (16) comprises a silicon or aluminium oxide base which surface is etched.

7. The device according to one of claims 1 to 4, wherein said one or more qubits (20) are made with bosonic-encoded three-dimensional harmonic resonators (22).

8. The device according to claim 7, wherein the three-dimensional harmonic resonators (22) are made in said electrical conductor (4).

9. The device according to claim 7, wherein the three-dimensional harmonic resonators (22) are made in the artificial magnetic conductor (6).

10. The device according to one of claims 7 to 9, further comprising a two-dimensional superconducting circuit (16) arranged to control or measure said one or more qubits (20).

11. The device according to one of claims 5, 6 and 10, wherein the superconducting circuit (16) is disposed substantially against the face (8) of said electrical conductor (4), substantially against the face (14) of said artificial magnetic conductor (6) or between them, occupying part or all of the space between them.

12. The device according to one of the preceding claims, wherein the electrical conductor (4) is made of aluminium with a degree of purity greater than or equal to 99.99%, niobium, superconducting material or copper covered with a superconducting film such as aluminium, niobium, tantalum, titanium nitride or niobium nitride.

13. A quantum computational unit **characterised in that** it comprises several devices according to the preceding claim arranged one after the other along a length direction of the face (8) of the electrical conductor (4) of said several devices.
